# EUROPÄISCHE PATENTSCHRIFT

(11) **EP 0 737 609 B1**
(45) Veröffentlichungstag und Bekanntmachung des Hinweises auf die Patenterteilung: **23.09.1998**
(21) Anmeldenummer: 95111147.5
(22) Anmeldetag: 17.07.1995
(51) Int. Cl.: B62B 3/10

(54) **Transportwagen für Plattenmaterial**
Trolley for panels
Chariot pour panneaux

(30) Priorität: 12.04.1995 DE 29506073 U
(43) Veröffentlichungstag der Anmeldung: 16.10.1996
(73) Patentinhaber: LIGMATECH MASCHINENBAU GmbH, D-09638 Lichtenberg (DE)
(72) Erfinder: Jenkner, Erwin, 71083 Oberjesingen (DE)
(74) Vertreter: Dreiss, Fuhlendorf, Steimle & Becker

(56) Entgegenhaltungen:
- DE-U- 8 622 696
- DE-U- 9 400 411
- FR-A- 1 396 680
- GB-A- 2 198 395
- US-A- 2 604 210
- US-A- 3 191 959
- US-A- 3 840 243
- US-A- 4 678 090
- US-A- 5 037 117

## Beschreibung

Die Erfindung betrifft einen Transportwagen für Plattenmaterial, mit den Merkmalen des Oberbegriffs von Anspruch 1.

Ein derartiger Transportwagen ist bereits bekannt (vgl. Prospektblatt 8.1.4. 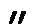 Kommissions-Container Typ D" der Firma LIGMATECH).

Das hintere Gestellteil dieser Transportwagen ist hierbei mit zwei horizontal und in einer vertikalen Ebene im Abstand übereinander angeordneten Plattenabstützleisten zur seitlichen Abstützung von auf der Bodenplatte hochkant abgestellten Platten, wie sie beispielsweise bei der Möbelproduktion anfallen, ausgestattet.

Der gegenseitige Abstand ihrer sich in Richtung auf die offene Vorderseite des Transportwagens erstreckenden, fingerartigen Plattenseitenanschläge ist derart bemessen, dass sich das diesen Plattenabstützleisten zugekehrte, vertikale Plattenrandstück mit geringem seitlichen Spiel zwischen deren benachbarte Plattenseitenanschläge einschieben lässt. Dadurch ist insbesondere sichergestellt, dass Platten mit hochempfindlicher Oberfläche sich während des Transportes nicht berühren können und somit deren Oberflächenqualität erhalten bleibt.

Die gleich grossen Abstände der Plattenseitenanschläge sind hierbei auf ein vorbestimmtes Plattendickenmaß abgestimmt. Demgemäss lassen sich solche Transportwagen stets nur mit Platten der gleichen Dicke beschicken. Sofern deshalb insbesondere bei der Möbelfertigung Platten unterschiedlicher Dicke zu verarbeiten sind, ist es erforderlich, Transportwagen bereitzustellen, bei denen der Seitenabstand der Plattenseitenanschläge jeweils einem dieser Dickenmaße angepasst ist.

Der Raumbedarf für die Unterbringung solcher Transportwagen kann dabei, ihrer erforderlichen Anzahl entsprechend, beträchtlich sein.

Aus der US 3,840,243 ist ein Transportwagen bekannt, dessen Bodenplatte hochschwenkbar ist, um zur raumsparenden Unterbringung des Transportwagens die auf Schwenklaufrollen abgestützten Gestellseitenteile um eine vertikale Schwenkachse nach innen einklappen zu können. Vorrichtungen zum seitlichen Abstützen hochkant abgestellter Platten mit unterschiedlicher Dicke und empfindlicher Oberfläche sind hier jedoch nicht vorgesehen.

Schliesslich ist aus DE-U-94 00 411 bereits ein Transportwagen für Glasplatten bekannt, bei dem Glasplatten auf einer Bodenplatte hochkant abstellbar sind.

Damit die Glasplatten zuverlässig in seitlichem Abstand voneinander gehalten werden können, weist der Transportwagen an einem aufrechten Gestellteil beispielsweise zwei horizontal und im Abstand übereinander angeordnete Plattenabstützleisten auf, auf denen horizontal verschiebbare und festlegbare, die Glasplatten an der zugekehrten Plattenkante seitlich umgreifende Abstandshalter angeordnet sind.

Dieser Transportwagen ermöglicht es zwar, Glasplatten unterschiedlicher Dicke seitlich abgestützt zu transportieren, indem sich die Abstandshalter dem Plattendickenmaß entsprechend auf den Tragstangen festlegen lassen; das Wagengestell ist aber gleichfalls nicht so veränderbar, dass eine raumsparende Unterbringung bei Nichtgebrauch des Transportwagens möglich ist.

Der Erfindung liegt die Aufgabe zugrunde, einen Transportwagen für Plattenmaterial in einer im Oberbegriff des Anspruches 1 erläuterten Ausbildung anzugeben, der sowohl für den sicheren Transport von in Flächenausdehnung und Dicke von einander verschiedenen Platten geeignet ist als auch eine platzsparende Aufbewahrung in Ausserbetriebsstellung bzw. bei Nichtgebrauch ermöglicht.

Diese Aufgabe wird erfindungsgemäss durch die kennzeichnenden Merkmale des Anspruches 1 gelöst.

Die veränderbare, gegenseitige seitliche Zuordnung der Plattenseitenanschläge bietet den Vorteil, auf die Bereitstellung mehrerer Transportwagen für den Transport von in der Dicke unterschiedlichen Platten verzichten zu können.

Durch die Anordnung eines eine oberhalb der Wagenbodenplatte an einem seitlichen Gestellteil einerseits und an einem aufrechten Zwischenwandelement andererseits abgestützten Ablageplatte wird eine zusätzliche horizontale Ablageebene für kleinere, plattenförmige Werkstücke, wie beispielsweise Fachböden, geschaffen, wobei das Zwischenwandelement in der Höhe der Ablageplatte enden oder dieselbe weit überragen kann, um beispielsweise einen Wandteil zum Anlehnen relativ hoher Werkstücke, wie beispielsweise Schrankseitenteile, zu schaffen. Dabei steht die Ablageplatte jederzeit zum Gebrauch zur Verfügung, ohne diese zu deren Unterbringung bei Nichtgebrauch speziell vom Fahrgestell abbauen zu müssen.

Trotz der mehreren Ablagemöglichkeiten kann der Platzbedarf für den erfindungsgemässen Transportwagen ganz wesentlich verringert werden, indem sich dieser durch Abnehmen des Zwischenwandelementes, Abklappen der Ablageplatte, Hochschwenken der Bodenplatte und Einklappen der Seitenteile auf einen Bruchteil seiner Breite bringen lässt.

Damit auch in zusammengeklapptem Zustand des Transportwagens dessen Zwischenwandelement bzw. -elemente am Transportwagen verbleiben können, wird vorgeschlagen, deren Anordnung gemäss Anspruch 2 zu treffen.

Eine Aufnahme überlanger bzw. grossformatiger Plattenteile, wie beispielsweise Schrankrückwände, wird durch eine Weiterbildung der Erfindung gemäss Anspruch 3 ermöglicht. Damit die hierzu vorgesehenen Aufnahmevorrichtungen einer wirksamen Minimierung der Wagenbreite nicht hinderlich sind, ist es schliesslich günstig, diese gemäss Anspruch 4 am hinteren Gestellteil verschwenkbar vorzusehen.

Die Änderung des gegenseitigen Abstandes der Plattenseitenanschläge lässt sich beispielsweise gemäss den Ansprüchen 5 und 6 vorteilhaft bewerkstelligen, wobei die Plattenhalteleiste und die Plattenseitenanschläge mit gegenseitig in Eingriff bringbaren Vorsprüngen und Vertiefungen ausgestattet sein können, um die Plattenseitenanschläge, ohne umständliches Einstellen, um einen dem jeweiligen Plattendickenmaß entsprechenden Betrag definiert in seitlicher Richtung verlagern zu können.

Eine mit besonderem Vorzug zu gebrauchende Konstruktion ist hierbei Gegenstand des Anspruches 7. In diesem Falle sind lediglich Plattenhalteleisten auf Lager zu halten, bei denen der Abstand ihrer Plattenseitenanschläge jeweils einem gängigen Plattendickenmaß angepasst ist. Solche Plattenhalteleisten lassen sich in kürzester Zeit austauschen.

Gemäss Anspruch 8 kann auch eine zweifache Anordnung von Zwischenwandelementen und Ablageplatten vorgesehen sein, was sich insbesondere für Transportwagen mit entsprechend grosser Länge empfiehlt, um alle beispielsweise zu einem grossen Möbelkorpus gehörenden plattenförmigen Einzelteile auf diesem gleichzeitig lagern und transportieren zu können.

Eine günstige Konstruktion ergibt sich hierbei gemäss Anspruch 9.

In der Zeichnung ist ein Ausführungsbeispiel eines erfindungsgemässen Transportwagens dargestellt. Es zeigen:

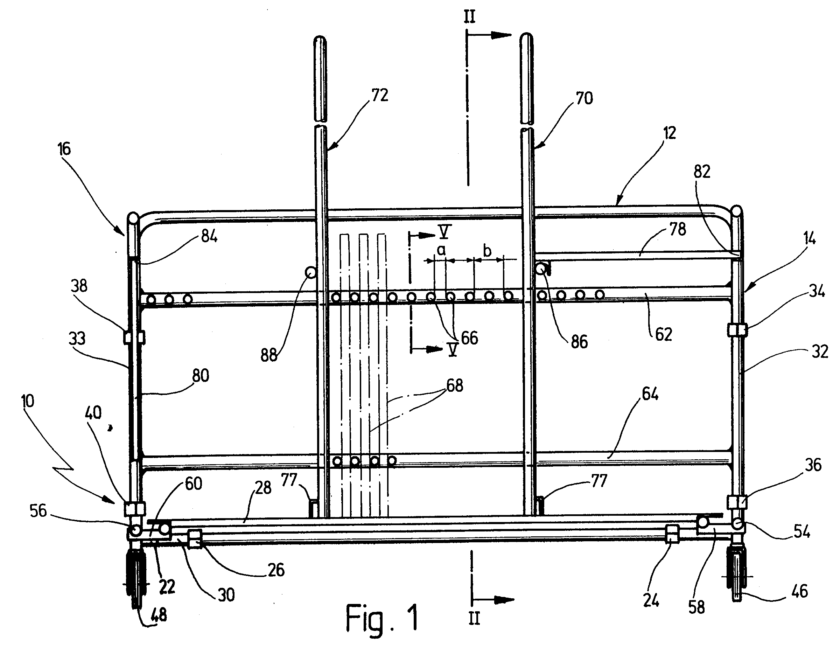

- Fig. 1:: eine Wagenvorderansicht, entlang der Schnittlinie I-I der Fig. 3 gesehen;
- Fig. 2:: einen Wagenquerschnitt, entlang der Linie II-II der Fig. 1 gesehen;
- Fig. 3:: eine Wagendraufsicht;
- Fig. 4:: zur Veranschaulichung einer Konstruktionsvariante einen Ausschnitt der Wagenseitenansicht gemäss Fig. 2;
- Fig. 5:: einen Schnitt entlang der Linie V-V der Fig. 1, in vergrössertem Maßstab;

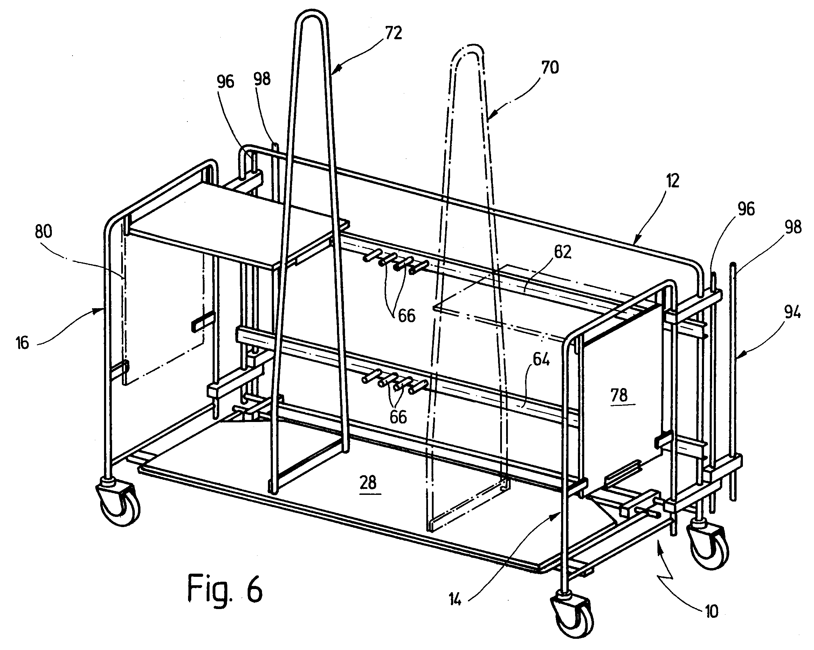

- Fig. 6:: eine schaubildliche Darstellung des Transportwagens, von vorne gesehen;
- Fig. 7:: eine schaubildliche Darstellung des Transportwagens, von hinten gesehen;
- Fig. 8:: eine Darstellung ähnlich Fig. 6, bei der das rechte Gestellseitenteil zum Zusammenklappen des Transportwagens in bereits eingeklappter Stellung dargestellt ist.

Der gezeigte Transportwagen weist ein als Ganzes mit 10 bezeichnetes, in Draufsicht rechteckförmiges Fahrgestell mit einem an der einen Wagenlängsseite vorgesehenen aufrechten, hinteren Gestellteil 12 und zwei, jeweils an einer der Gestellstirnseiten aufrecht vorgesehene Gestellseitenteile 14 und 16 auf. Fahrgestell 10 und Gestellteile 12, 14, 16 sind vorzugsweise als Rohrkonstruktion ausgelegt. Die Gestellteile 12, 14 und 16 sind dabei jeweils durch ein umgekehrt U-förmig gebogenes Stahlrohr gebildet.

Die Rohr- bzw. U-Schenkel 18, 20 des hinteren Gestellteils 12 können am unteren Ende mit einem unteren, rohrförmigen Längsschenkel 22 des Fahrgestells fest verbunden sein. Auf diesem sind Scharnierkörper 24 und 26 befestigt, in welchen eine eine Bodenplatte 28 tragende Scharnierwelle 30 gelagert ist.

Die beiden Gestellseitenteile 14 und 16 sind mit ihrem hinteren U-Schenkel 32 bzw. 33 gleichfalls jeweils in zwei Scharnierkörpern 34 und 36 bzw. 38 und 40 um vertikale Achsen verschwenkbar gelagert, die ihrerseits an einem der U-Schenkel 18 bzw. 20 des hinteren Gestellteils 12 drehfest gehalten sind.

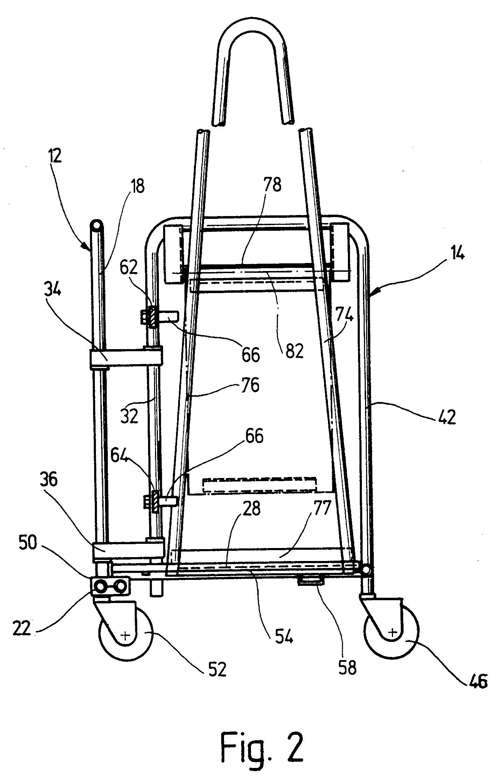

Deren vorderer U-Schenkel 42 bzw. 44 ist von einer Schwenklaufrolle 46 bzw. 48 abgestützt. Ebenso sind die U-Schenkel 18, 20 jeweils über eine Rohrklemme 50 auf einer Schwenklaufrolle 52 (Fig. 2) abgestützt.

In ihrer horizontalen Gebrauchslage stützt sich die Bodenplatte 28 zwischen den Gestellseitenteilen 14, 16 an diesen ab, wozu deren U-Schenkel 32, 42 bzw. 33, 44 mit ihren Enden über jeweils einen rohrförmigen Verbindungssteg 54 bzw. 56 miteinander verbunden sind, von welchen in deren vorderem Endbereich jeweils eine Plattenstütze 58 bzw. 60 nach innen abragt, auf welchen die Bodenplatte 28 mit formschlüssigem Eingriff aufruht.

Mit 62 und 64 sind zwei Plattenhalteleisten bezeichnet, die im Abstand parallel zueinander zwischen die U-Schenkel 18, 20 des hinteren Gestellteils 12 eingeschweisst sind. Von diesen ragen horizontal angeordnete, fingerartig ausgebildete Plattenseitananschläge 66 in Richtung auf die offene Vorderseite des Transportwagens ab, die in gleichen Seitenabständen voneinander sowie in der gleichen Vertikalebene übereinander vorgesehen sind. Ihr Seitenabstand ist hierbei geringfügig grösser als eine bestimmte, gängige Dicke von zu transportierenden Platten gewählt.

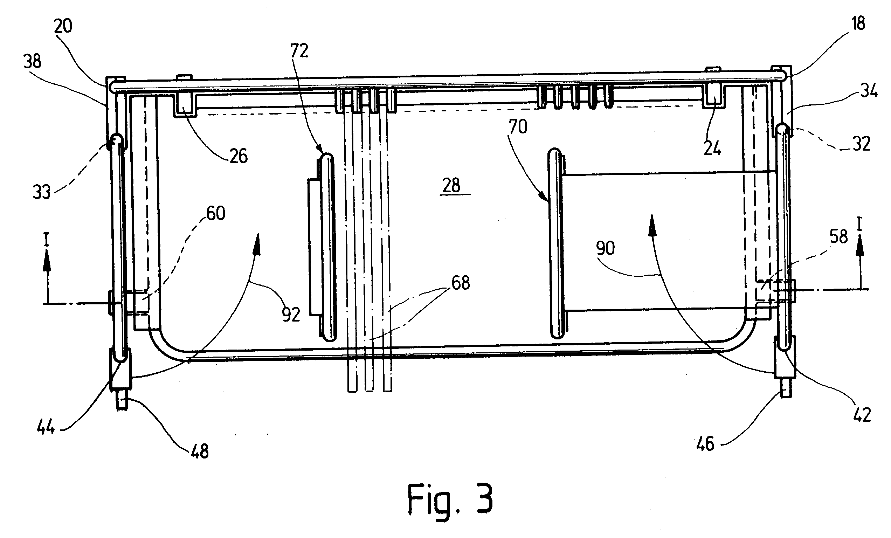

Wie Fig. 3 veranschaulicht, lassen sich auf der Bodenplatte 28 hochkant abgestellte Platten 68 mit ihrem hinteren Kantenbereich zwischen diese fingerartigen Plattenseitenanschläge 66 einschieben, so dass sich insbesondere Platten mit hochempfindlichen Oberflächen während ihres Transportes nicht berühren und damit auch nicht beschädigen können.

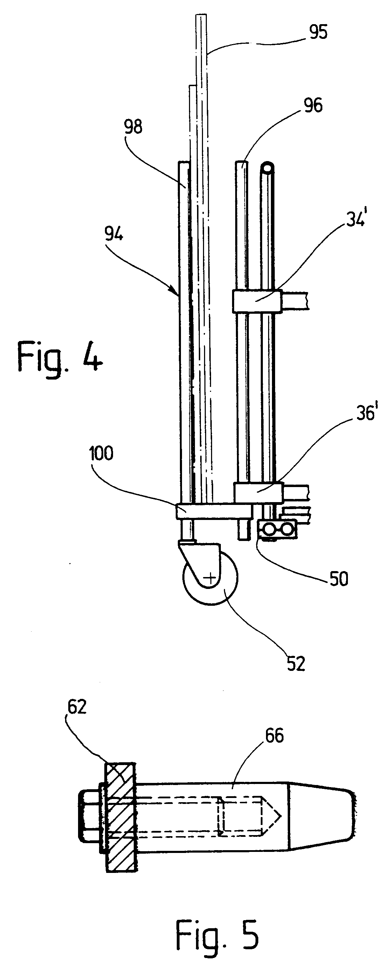

Wie Fig. 5 zeigt, sind die Plattenseitenanschläge 66 an der jeweiligen Plattenhalteleiste 62 bzw. 64 jeweils mittels einer Befestigungsschraube 71 und somit auswechselbar gehalten. Ihr seitlicher Abstand a ist hierbei derart gewählt, dass durch Wegnahme eines Plattenseitenanschlages 66 der dadurch entstehende grössere Seitenabstand b einer weiteren gängigen Plattendicke entspricht.

Zum Umrüsten auf andere Seitenabstände können alternativ die Plattenhalteleisten 62, 64 auch gegen andere Plattenhalteleisten mit entsprechend geändertem Seitenabstand ihrer Plattenseitenanschläge 66 austauschbar sein.

Zwischen den Gestellseitenteilen 14, 16 sind vorzugsweise noch zwei vertikale Zwischenwandelemente 70 und 72 abnehmbar angeordnet, die vorzugsweise gleichfalls durch ein umgekehrt U-förmig gebogenes Stahlrohr gebildet sind. Das untere Ende ihrer Schenkel 74, 76 ist jeweils durch eine geeignete Steckverbindung 77 an der Bodenplatte 28 lösbar festgelegt.

Die Anordnung der Zwischenwandelemente 70 und 72 ist vorzugsweise derart getroffen, das der Abstand zwischen beiden Gestellseitenteilen 14 und 16 gedrittelt wird.

Den beiden aussenliegenden Zwischenräumen ist jeweils eine Ablageplatte 78 bzw. 80 zugeordnet, die vorzugsweise im oberen Bereich der Gestellseitenteile 14 und 16 zwischen deren U-Schenkeln 32, 42 bzw. 33, 44 auf einer Schwenkachse 82 bzw. 84 verschwenkbar gehalten ist.

Diesen Ablageplatten 78, 80 ist an jedem zugeordneten Zwischenwandelement 70 bzw. 72 eine Stütztraverse 86 bzw. 88 zugeordnet, auf welche die betreffende Ablageplatte 78 bzw. 80 in ihrer hochgeschwenkten Gebrauchslage auflegbar ist, wobei das Zwischenwandelement 70 bzw. 72 in seiner aufrechten Montagestellung dadurch zugleich festgelegt wird.

Durch die Ablageplatten 78 bzw. 80 werden zusätzliche Ablageebenen für kleinere Plattenformate geschaffen, wobei die Zwischenwandelemente 70, 72, insbesondere wenn sie, wie dargestellt, entsprechend hoch ausgelegt sind, zur sicheren seitlichen Abstützung insbesondere langer, hochkant aufzustellender Werkstückplatten verwendbar sind.

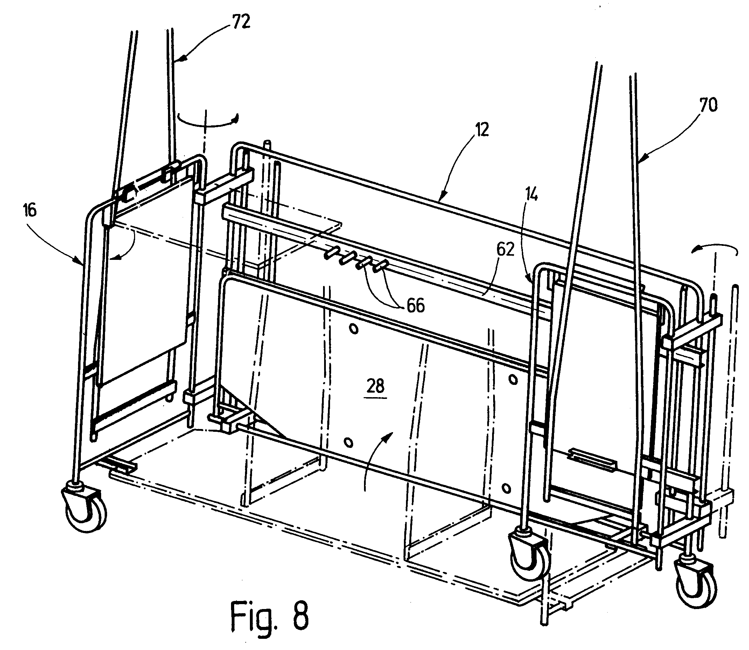

Um zur Aufbewahrung des Transportwagens möglichst wenig Raum beanspruchen zu müssen, ist dieser in der Breite veränderbar. Hierzu ist zunächst die Bodenplatte 28 in eine aufrechte Lage zu verschwenken, wodurch die Gestellseitenteile 14 und 16 freigegeben werden und, gemäss den Pfeilen 90 und 92 (Fig. 3), in eine zum hinteren Gestellteil 12 annähernd parallele Lage um die vertikale Achse der Scharnierkörper 34, 36 bzw. 38, 40 einschwenkbar sind (s. auch Fig. 8).

Sind Zwischenwandelemente 70, 72 vorgesehen, so sind zuvor die Ablageplatten 78, 80 In ihre Nichtgebrauchslage nach unten zu verschwenken und die Zwischenwandelemente 70, 72 von der Bodenplatte 28 abzunehmen. Vorzugsweise sind sie vor dem Einklappen der Gestellseitenteile 14, 16 an deren Aussenseite anzuhängen (s. Fig. 8), so dass sie auch bei zusammengeklapptem Transportwagen an diesem verbleiben.

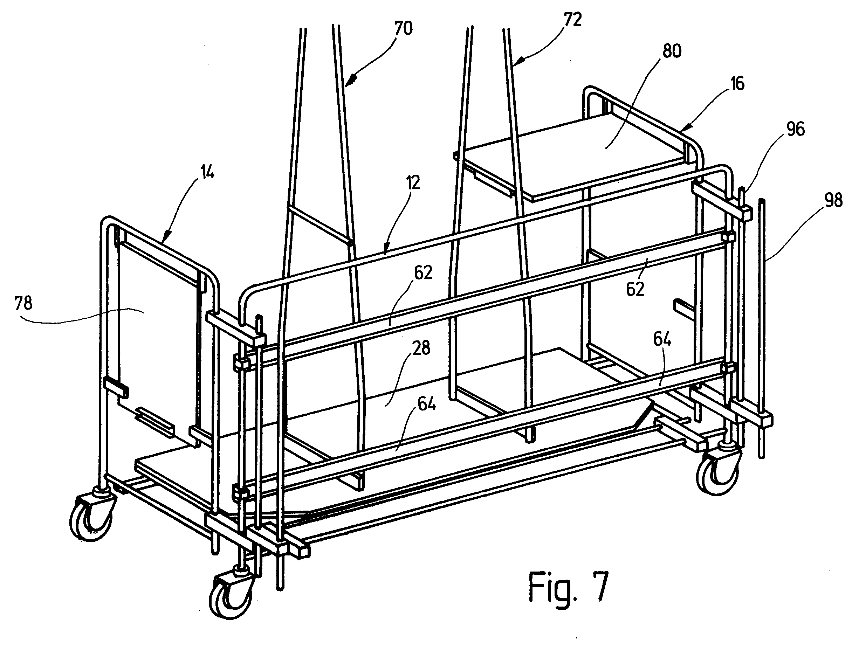

Wie Fig. 4 zeigt, kann der Transportwagen auf der Rückseite des hinteren Gestellteils 12 noch mit einer zusätzlichen Aufnahmevorrichtung 94 zur Aufnahme hoher und insbesondere grossflächiger, plattenförmiger Werkstücke, wie beispielsweise Schrankwände 95 u.dgl., ausgestattet sein. Sie ist vorzugsweise durch zwei U-förmige Halterungen gebildet, von denen jede mit dem U-Schenkel 18 bzw. 20 des hinteren Gestellteils 12 verbunden ist. Der eine U-Schenkel 96 dieser Halterungen ist über entsprechend modifizierte Scharnierkörper 34', 36' (s. Fig. 4) mit dem hinteren U-Schenkel 18 bzw. 20 des hinteren Gestellteils 12 verbunden, und deren anderer U-Schenkel 98 ist über einen unteren Scharnierkörper 100 mit dem U-Schenkel 96 schwenkbar verbunden. In diesem Falle ist der U-Schenkel 98 z.B. von der Schwenklaufrolle 52 abgestützt (Fig. 4). Die Schwenklaufrolle 52 kann alternativ auch den benachbarten U-Schenkel 96 abstützen (Fig. 7).

## Patentansprüche

1. Transportwagen für Plattenmaterial (68), mit einem im Grundriss rechteckförmigen Fahrgestell (10), das sowohl an der hinteren Wagenlängsseite als auch an beiden Wagenstirnseiten jeweils ein aufrecht angeordnetes Gestellteil (12, 14, 16) aufweist, wobei das hintere Gestellteil (12) oberhalb und Parallel zu einer Wagenbodenplatte (28) wenigstens eine Plattenhalteleiste (62) aufweist, die eine Vielzahl von horizontal und in seitlichem Abstand voneinander angeordnete, Plattenseitenanschläge (66) bildende Vorsprünge aufweist, zwischen die auf der Wagenbodenplatte (28) hochkant abzustellende Platten (68) mit ihrer dem hinteren Gestellteil (12) zugerichteten Plattenkante einschiebbar sind,
**dadurch gekennzeichnet,**
dass der gegenseitige Abstand der Plattenseitenanschläge (66) der Plattenhalteleiste (62) veränderbar ist,
dass zwischen den Gestellseitenteilen (14, 16) mindestens ein auf die Wagenbodenplatte (28) abnehmbar aufgestelltes Zwischenwandelement (70 bzw. 72) angeordnet ist, das mittels einer im Abstand oberhalb der Wagenbodenplatte (28) gehaltenen Ablageplatte (78, 80) festlegbar ist, wobei die Ablageplatte an dem Zwischenwandelement eingehängt und an einem der Gestellseitenteile (14 bzw. 16) um eine horizontale Achse (82 bzw. 84) verschwenkbar ist, und
dass die Endbereiche des hinteren Gestellteils (12) sowie die Gestellseitenteile (14, 16) auf jeweils einer Schwenklaufrolle (46, 48, 52) abgestützt sind, wobei die Gestellseitenteile (14, 16) am hinteren Gestellteil (12) jeweils um eine vertikale Schwenkachse nach innen einklappbar sind und in ihrer ausgeklappten, zum hinteren Gestellteil (12) senkrechten Stellung durch die am hinteren Gestellteil (12) hochschwenkbar gelagerte Bodenplatte (28) festlegbar sind.

2. Transportwagen nach Anspruch 1, dadurch gekennzeichnet, dass das wenigstens eine Zwischenwandelement (70 bzw. 72) an die Aussenseite eines der eingeklappten Gestellseitenteile (14 bzw. 16) anhängbar ist.

3. Transportwagen nach Anspruch 1 oder 2, dadurch gekennzeichnet, dass am hinteren Gestellteil (12) in dessen Endbereichen aussenseitig jeweils eine U-förmige Aufnahmevorrichtung (94) vorgesehen ist, die zueinander fluchten.

4. Transportwagen nach Anspruch 3, dadurch gekennzeichnet, dass die Aufnahmevorrichtungen (94) am hinteren Gestellteil (12) jeweils um eine vertikale Achse verschwenkbar und an dieses anlegbar sind.

5. Transportwagen nach einem der vorhergehenden Ansprüche, dadurch gekennzeichnet, dass die Plattenseitenanschläge (66) an der Plattenhalteleiste (62) abnehmbar befestigt sind.

6. Transportwagen nach einem der vorhergehenden Ansprüche 1 bis 4, dadurch gekennzeichnet, dass die Plattenseitenanschläge (66) an der Plattenhalteleiste (62) in deren Längsrichtung verstellbar und feststellbar angeordnet sind.

7. Transportwagen nach einem der vorhergehenden Ansprüche 1 bis 4, dadurch gekennzeichnet, dass die Plattenhalteleiste (62) gegen jeweils eine Plattenhalteleiste auswechselbar ist, deren Plattenseitenanschläge einen anderen Seitenabstand voneinander aufweisen.

8. Transportwagen nach einem der vorhergehenden Ansprüche, gekennzeichnet durch zwei in seitlichem Abstand voneinander angeordnete und durch jeweils eine Ablageplatte (78 bzw. 80) aufrecht gehaltene Zwischenwandelemente (70, 72).

9. Transportwagen nach Anspruch 1 oder 8, dadurch gekennzeichnet, dass das wenigstens eine Zwischenwandelement (70 bzw. 72) ebenso wie jedes der aufrechten Gestellseitenteile (14, 16) durch ein umgekehrt U-förmig gebogenes Stahlrohr gebildet ist, dessen U-Schenkel (74, 76) mit ihrem freien Ende durch jeweils eine Steckverbindung (77) an der Wagenbodenplatte (28) festlegbar sind.

## Claims

1. A transport trolley for panel material (68) comprising a chassis (10) which is rectangular in plan and which has a respective uprightly arranged support frame portion (12, 14, 16) both at the rear longitudinal side of the trolley and also at both ends of the trolley, wherein the rear support frame portion (12) has above and parallel to a trolley bottom plate (28) at least one panel holding bar (62) which has a plurality of projections which are arranged horizontally and at lateral spacings from each other and which form panel side abutments (66) and between which panels (68) which are to be set down in an on-edge position on the trolley bottom plate (28) can be inserted with their panel edge which is towards the rear support frame portion (12), characterised in that
the mutual spacing of the panel side abutments (66) of the panel holding bar (62) is variable,
arranged between the support frame side portions (14, 16) is at least one intermediate wall element (70 and 72 respectively) which is fitted removably on to the trolley bottom plate (28) and which can be fixed by means of a storage plate (78, 80) which is held at a spacing above the trolley bottom plate (28), wherein the storage plate is suspended on the intermediate wall element and is pivotable on one of the support frame side portions (14 or 16 respectively) about a horizontal axis (82 or 84 respectively), and
the end regions of the rear support frame portion (12) and the support frame side portions (14, 16) are supported on a respective castor wheel (46, 48, 52), wherein the support frame side portions (14, 16) are each foldable inwardly at the rear support frame portion (12) about a respective vertical pivot axis and can be fixed in their outwardly extended position in which they are perpendicular to the rear support frame portion (12) by the bottom plate (28) which is mounted in such a way that it can be pivoted upwardly on the rear support frame portion (12).

2. A trolley according to claim 1 characterised in that the at least one intermediate wall element (70 and 72 respectively) can be attached to the outside of one of the inwardly folded support frame side portions (14 or 16 respectively).

3. A trolley according to claim 1 or claim 2 characterised in that a respective U-shaped receiving means (94) is provided on the rear support frame portion (12) in each of the end regions thereof on the outside thereof, the receiving means (94) being aligned with each other.

4. A trolley according to claim 3 characterised in that the receiving means (94) are each pivotable on the rear support frame portion (12) about a vertical axis and can be applied thereagainst.

5. A trolley according to one of the preceding claims characterised in that the panel side abutments (66) are removably secured to the panel holding bar (62).

6. A trolley according to one of preceding claims 1 to 4 characterised in that the panel side abutments (66) are arranged on the panel holding bar (62) displaceably and fixably in the longitudinal direction thereof.

7. A trolley according to one of preceding claims 1 to 4 characterised in that the panel holding bar (62) can be replaced by a respective panel holding bar whose panel side abutments are at a different lateral spacing from each other.

8. A trolley according to one of the preceding claims characterised by two intermediate wall elements (70, 72) which are arranged at a lateral spacing from each other and which are held upright by a respective storage plate (78 and 80 respectively).

9. A trolley according to claim 1 or claim 8 characterised in that the at least one intermediate wall element (70 or 72 respectively) and each of the upright support frame side portions (14, 16) is formed by a steel tube which is bent in an inverted U-shape and the limbs (74, 76) of which can be fixed with their free end to the trolley bottom plate (28) by means of a respective push-in connection (77).

## Revendications

1. Chariot pour panneaux (68), avec un châssis (10) roulant de plan d'ensemble rectangulaire (10), qui présente tant au niveau du côté longitudinal arrière du chariot qu'au niveau des deux côtés avant du chariot respectivement un élément de châssis (12, 14, 16) placé debout, l'élément de châssis arrière (12) présentant ce faisant au-dessus et parallèlement à une plaque de fond du chariot (28) au moins une barre de retenue de panneaux (62), qui présente une pluralité d'éléments faisant saillie horizontaux et espacés latéralement entre eux constituant des butées latérales pour panneaux (66) entre lesquelles des panneaux (68) devant être placés debout sur la plaque de fond du chariot (28) peuvent être intercalés avec leur bord de panneau orienté vers l'élément de châssis arrière (12),
caractérisé
en ce que l'écartement réciproque des butées latérales pour panneaux (66) de la barre de retenue de panneaux (62) peut être modifié,
en ce qu'au moins un élément de cloison de séparation (70 ou 72) est disposé de façon amovible sur la plaque de fond du chariot (28) entre les éléments latéraux de châssis (14, 16), qui peut être fixé au moyen d'une plaque de réception (78, 80) maintenue à l'écart au-dessus de la plaque de fond du chariot (28), la plaque de réception étant suspendue à l'élément de cloison de séparation et étant fixée à l'un des éléments latéraux de châssis (14 ou 16) de façon à pouvoir pivoter autour d'un axe horizontal (82 ou 84), et
en ce que les zones d'extrémité de l'élément de châssis arrière (12) ainsi que les éléments latéraux de châssis (14, 16) sont respectivement supportés sur une roue pivotante (46, 48, 52), les éléments latéraux de châssis (14, 16) pouvant être escamotables vers l'intérieur au niveau de l'élément de châssis arrière (12) respectivement autour d'un axe de pivotement vertical et pouvant être fixés dans leur position rabattue verticale par rapport à l'élément de châssis arrière (12) par l'intermédiaire de la plaque de fond (28) logée de façon à pouvoir être relevée en basculant au niveau de l'élément de châssis arrière (12).

2. Chariot selon la revendication 1, caractérisé en ce que le dit au moins un élément de cloison de séparation (70 ou 72) peut être suspendu au côté extérieur de l'un des éléments latéraux de châssis rabattus (14 ou 16).

3. Chariot selon la revendication 1 ou 2, caractérisé en ce qu'il est prévu au niveau de l'élément de châssis arrière (12) dans ses zones d'extrémité du côté extérieur respectivement un dispositif de préhension en forme de U (94), qui est aligné avec les autres.

4. Chariot selon la revendication 3, caractérisé en ce que les dispositifs de préhension (94) peuvent respectivement pivoter et être fixés au niveau de l'élément de châssis arrière (12) autour d'un axe vertical.

5. Chariot selon l'une quelconque des revendications précédentes, caractérisé en ce que les butées latérales pour panneaux (66) sont fixées de façon amovible à la barre de retenue de panneaux (62).

6. Chariot selon l'une quelconque des revendications précédentes 1 à 4, caractérisé en ce que les butées latérales pour panneaux (66) sont disposées sur la barre de retenue de panneaux (62) de façon à pouvoir être ajustées dans sa direction longitudinale et être fixées.

7. Chariot selon l'une quelconque des revendications précédentes 1 à 4, caractérisé en ce que la barre de retenue de panneaux (62) peut être remplacée respectivement par une barre de retenue de panneaux, dont les butées latérales pour panneaux présentent un autre écartement latéral entre elles.

8. Chariot selon l'une quelconque des revendications précédentes, caractérisé par deux éléments de cloison de séparation (70, 72), décalés latéralement entre eux et maintenus debout par une plaque de réception (78 ou 80) respective.

9. Chariot selon la revendication 1 ou 8, caractérisé en ce que le dit au moins un élément de cloison de séparation (70 ou 72) ainsi que chacun des éléments latéraux de châssis verticaux (14, 16) est conçu par un tube en acier recourbé en U inversé, dont les montants en U (74, 76) peuvent être fixés à la plaque de fond du chariot (28) avec leur extrémité libre au moyen d'un raccord mâle femelle (77) respectif.
